Europäisches Patentamt

European Patent Office

Office européen des brevets

(19)

(11) Numéro de publication : **0 063 077**
**B1**

(12) **FASCICULE DE BREVET EUROPÉEN**

(45) Date de publication du fascicule du brevet :
09.10.85

(51) Int. Cl.⁴ : **G 02 F   1/135**

(21) Numéro de dépôt : **82400581.3**

(22) Date de dépôt : **30.03.82**

(54) **Procédé de commande d'un dispositif de visualisation.**

(30) Priorité : **10.04.81 FR 8107206**

(43) Date de publication de la demande :
**20.10.82 Bulletin 82/42**

(45) Mention de la délivrance du brevet :
**09.10.85 Bulletin 85/41**

(84) Etats contractants désignés :
**CH DE GB LI NL**

(56) Documents cités :
**GB-A- 2 005 857**
**US-A- 3 960 439**
**US-A- 4 037 932**

(73) Titulaire : **THOMSON-CSF**
**173, Boulevard Haussmann**
**F-75379 Paris Cedex 08 (FR)**

(72) Inventeur : **Aubourg, Philippe**
**THOMSON-CSF SCPI 173, bld Haussmann**
**F-75360 Paris Cedex 08 (FR)**
Inventeur : **Huignard, Jean-Pierre**
**THOMSON-CSF SCPI 173, bld Haussmann**
**F-75360 Paris Cedex 08 (FR)**
Inventeur : **Hareng, Michel**
**THOMSON-CSF SCPI 173, bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

**Description**

La présente invention se rapporte à un procédé de commande d'un dispositif de visualisation tel qu'une valve optique à cristal liquide commandée par effet photoconducteur qui peut servir de convertisseur d'images. Ce dispositif met en œuvre une cellule, soumise à une tension électrique de polarisation se partageant entre une couche mince de cristal liquide et une lame photoconductrice accolée à cette couche. Elle concerne notamment la visualisation des images produites par les rayons X en radioscopie ou en radiographie, et la projection d'images en lumière incohérente ainsi que l'utilisation dans des dispositifs de traitement de données mettant en œuvre un rayonnement cohérent (par exemple un corrélateur optique).

Une telle cellule repose sur les effets connus suivants : d'une part la propriété qu'ont les matériaux mésomorphes de moduler un rayonnement optique en fonction d'un champ électrique qui leur est appliqué, d'autre part la propriété des matériaux photoconducteurs qui voient leur résistance électrique diminuer en recevant un rayonnement lumineux incident.

Les matériaux mésomorphes sont faits de molécules longiformes orientables en présence d'une paroi solide, suivant une direction commune qui peut être soit parallèle soit perpendiculaire au plan de la paroi. La direction de cette orientation dépend des natures respectives du matériau cristal liquide et de la paroi. L'orientation des longues molécules du cristal liquide est en outre grandement facilitée par l'introduction de traces de surfactants appropriés dans le matériau mésomorphe, ainsi que par un traitement préalable des parois en contact avec le film (frottis de la paroi, évaporation sous incidence rasante d'un film d'oxyde de silicium). Suivant l'effet désiré, on utilisera un matériau mésomorphe présentant l'une ou l'autre des trois phases : smectique, nématique et cholestérique. Dans les dispositifs utilisant un photoconducteur associé à un cristal liquide on utilise généralement un cristal liquide de type nématique. Voici brièvement quelles sont les différentes utilisations de tels cristaux liquides.

Les longues molécules qui composent les matériaux mésomorphes présentent des anisotropies diélectriques prononcées ; en conséquence, elles tendent à s'orienter parallèlement ou perpendiculairement à un champ électrique selon que cette anisotropie est positive ou négative. Ainsi, en enserrant une lame d'un matériau nématique entre deux électrodes transparentes soumises à une tension électrique variable continue ou alternative, on constate, si le matériau présente une anisotropie diélectrique positive et est disposé en orientation parallèle, qu'au-delà d'une tension de seuil (de l'ordre de 1 à 5V pour un film d'une dizaine de microns d'épaisseur), que la biréfringence de la lame mesurée perpendiculairement à son plan décroît lorsque l'on fait croître la tension appliquée : les molécules tendant à s'orienter parallèlement au champ. Inversement pour un matériau nématique à anisotropie diélectrique négative soumis au même champ que précédemment, la biréfringence augmente lorsqu'on fait croître la tension appliquée. Cet effet, dit « biréfringence contrôlée », permet si l'on sait faire varier localement la tension appliquée à un film nématique disposé entre polariseurs parallèles ou croisés, de moduler spatialement l'intensité d'une lumière monochromatique transmise par la lame, ou la couleur d'une lumière polychromatique. Suivant une technique connue, il est également possible de mettre à profit les propriétés d'anisotropie diélectrique et optique des matériaux nématiques pour commander électriquement la lumière transmise par une couche mince en utilisant les structures dites « nématiques en hélice ». L'intensité de la lumière transmise par la couche sera fonction des tensions appliquées localement à cette couche.

Une autre manière de contrôler la lumière transmise ou réfléchie par une cellule à cristal liquide nématique est basée sur le phénomène de « diffusion dynamique » qui apparaît au-delà d'une seconde tension de seuil et qui masque très vite le phénomène de biréfringence. Comme la biréfringence contrôlée, la diffusion dynamique est parfaitement réversible. Toutefois, en ajoutant au matériau nématique un faible pourcentage de matériau cholestérique, on obtient un mélange doué de mémoire. L'application d'une tension alternative de fréquence plus élevée que la tension de commande permet de rétablir le mélange dans son état transparent initial.

Dans la demande de brevet déposée en France le 23 septembre 1977, publiée sous le No. FR-A-2 404 271 et intitulée « Dispositif de visualisation comportant une couche mince de cristal liquide accolée à une lame photoconductrice », la Demanderesse a décrit un dispositif utilisant une couche de cristal liquide en phase nématique accolée à une lame de matériau photoconducteur. A la cellule formée par l'association du cristal liquide et du matériau photoconducteur est appliquée une tension de polarisation. Dans ce dispositif les tensions appliquées à la cellule peuvent être très élevées d'autant que la sensibilité de la cellule au rayonnement d'inscription s'accroît lorsque la valeur de la tension de commande augmente. Dans ce cas la tension de commande peut atteindre 1 000 V et se rapprocher de la tension de claquage de la cellule.

Il est également connu, par le brevet américain US-A-3 960 439, de polariser au moyen d'une tension alternative une valve optique à cristal liquide commandée par effet photoconducteur. Cependant, les tensions de polarisation envisagées étant également élevées, il en résulte le même inconvénient que précédemment.

La présente invention propose de réduire la tension de polarisation à une valeur beaucoup plus faible en utilisant une tension alternative dont la fréquence est choisie en fonction du fonctionnement potentiométrique dynamique. On pourra ainsi accroître la sensibilité de la cellule sans craindre la tension de claquage et réduire la taille et le prix du générateur de tension de commande. Le rayonnement de lecture peut traverser la valve ou être réfléchi par une couche disposée à cet effet.

L'invention a pour objet un procédé de commande d'un dispositif de visualisation d'une information du type comprenant une valve optique constituée par une couche de cristal liquide, destinée à moduler un rayonnement optique incident de lecture, associée à une lame de matériau photoconducteur destinée à recevoir un rayonnement optique d'inscription, le dispositif comprenant également des moyens pour appliquer à ladite valve une tension de polarisation alternative de fréquence déterminée et d'amplitude Vo, ladite couche étant soumise à une fraction Vxl de ladite tension de polarisation, la valeur de ladite fraction étant fonction du rayonnement d'inscription, caractérisé en ce que ladite fréquence est choisie entre une limite inférieure égale à l'inverse de la constante de temps d'établissement de charge d'espace dudit matériau photoconducteur et une limite supérieure correspondant à la fréquence pour laquelle la variation du rapport de transmission en tension Vxl/Vo de ladite valve optique présente un point d'inflexion, ces deux valeurs étant déterminées pour le niveau d'illumination d'inscription à recevoir.

D'autres aspects et avantages de l'invention seront mieux compris à l'aide de la description ci-après, fournie à titre d'exemple non limitatif, ainsi que des figures annexées parmi lesquelles :

la figure 1 représente une valve optique comportant une couche de cristal liquide accolée à une lame d'un matériau photoconducteur ;

la figure 2 est un diagramme explicatif ;

la figure 3 est un schéma électrique équivalent de la cellule illustrée sur la figure 1 ;

les figures 4 et 5 sont des diagrammes explicatifs.

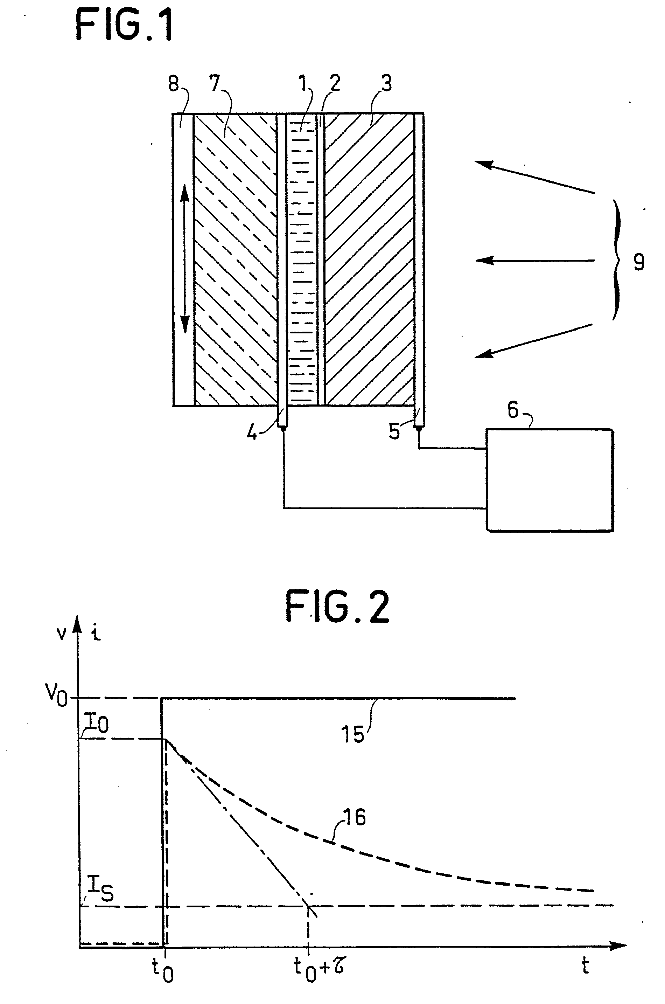

La figure 1 représente une valve optique comprenant une couche de cristal liquide 1, une lame 3 de matériau photoconducteur et le cas échéant une couche intermédiaire 2 réfléchissante pour le rayonnement de lecture, assurant un couplage électrique entre la couche 1 et la lame 3, tel que dans le plan de cette couche intermédiaire on ne produise pas de court-circuit des différents potentiels qui peuvent s'y manifester. La valve optique comprend en outre deux électrodes 4 et 5 pour appliquer la tension alternative issue du générateur 6, une lame support 7 placée du côté de la couche de cristal liquide et destinée à supporter l'électrode 4 et dans le cas où le rayonnement de lecture est un rayonnement de lumière polarisée, une lame polarisante 8 accolée au support 7. Cette cellule reçoit du côté photoconducteur un rayonnement d'inscription 9. L'électrode 5 et l'ensemble constitué par l'électrode 4 et la lame support 7 doivent être respectivement transparents au rayonnement constituant le faisceau d'inscription 9 et à un autre rayonnement utilisé pour la lecture de l'image inscrite. Les électrodes 4 et 5 peuvent être constituées par une couche de quelques dixièmes de micromètres d'épaisseur d'oxyde d'étain ou d'indium déposé par pulvérisation cathodique, ou d'un mélange de ces oxydes. Si le rayonnement d'inscription est un rayonnement X, on utilisera de préférence pour l'électrode 5 une couche d'un millier d'angströms d'épaisseur d'un métal à faible numéro atomique.

Dans le cas d'une lecture par réflexion, la couche 2 qui doit avoir une conductivité latérale faible doit aussi être réfléchissante. Pour assurer le passage du courant entre la lame photoconductrice 3 et la couche de cristal liquide 1 on peut adopter une couche faite d'une mosaïque de pastilles métalliques. Différentes compositions de couches multi-électriques à haut coefficient de réflexion répondent à ces impératifs.

Dans l'exemple de réalisation de la figure 1 la couche 1 de cristal liquide est constituée par un matériau mésomorphe se présentant en phase nématique à la température ambiante, d'une épaisseur de 15 micromètres environ. Le matériau mésomorphe est choisi de façon à présenter une anisotropie diélectrique négative ou positive suivant l'effet désiré. Dans le cas où une couche de cristal liquide à mémoire est nécessaire on utilisera un mélange nématique-cholestérique. Dans le cas où la couche de cristal liquide possède une structure en hélice, le rayonnement de lecture est polarisé linéairement et les moyens analyseurs sont des moyens analyseurs linéaires. La constante diélectrique relative de ces matériaux est de l'ordre de 10.

Le matériau photoconducteur constituant la lame 3 est dans l'exemple de la figure 1 un oxyde mixte de bismuth et de silicium (BSO). Il peut être avantageusement choisi pour présenter une bonne transparence dans une partie au moins du spectre correspondant à la lumière visible. Sa résistivité en absence d'illumination est de l'ordre de $10^{14}\Omega$ cm et diminue d'environ 1 000 fois pour un éclairement de 1 mW dans le proche ultraviolet. Ces matériaux peuvent se présenter sous la forme de lames suffisamment épaisses pour qu'ils jouent le rôle de support dans la valve optique. Le matériau photoconducteur utilisé comporte des pièges. L'effet photoconducteur, du fait de l'existence de pièges dans un matériau monocristallin ou polycristallin peut s'analyser comme suit. Les pièges sont des atomes d'impuretés uniformément distribués dans le volume du matériau photoconducteur. Ils sont capables de capturer un électron ou un trou qui ont diffusé à partir de l'endroit où ils ont été engendrés par excitation photonique. Lors de l'éclairement d'une lame photoconductrice les photons incidents qui ont une énergie suffisante peuvent créer des paires électron-trou. Si un champ électrique est appliqué à la lame, les électrons et les trous sont entraînés vers les électrodes. Pour un champ électrique continu les électrons sont attirés par l'électrode positive et les trous vers l'électrode négative. Les porteurs de charge créés dans le matériau par le rayonnement ionisant ou par l'excitation photonique sont piégés dans une région du volume où apparaît une charge d'espace qui réduit sensiblement le transport des charges électriques. Ces phénomènes sont illustrés par la figure 2 qui montre la loi de variation du courant i traversant une lame photoconductrice irradiée à laquelle on applique à l'instant $t_o$ un échelon de tension Vo représenté par la courbe 15. Le courant mesuré dans le circuit extérieur représenté par la courbe 16 décroît exponentiellement avec une constante de temps $\tau$ ; la valeur atteinte à saturation est Is < Io (Io : courant initial). Ce comportement est caractéristique d'un courant limité par charge d'espace. Contribuent à l'établissement de la charge d'espace :

les électrodes encadrant le photoconducteur et susceptibles d'être partiellement bloquantes,

les niveaux de pièges dans le photoconducteur,

la constante de temps $\tau$ liée au repiégeage des photo-électrons et proportionnelle à $1/\phi Np$ où $\phi$ est la densité de puissance optique incidente sur le cristal et Np le nombre de pièges. En régime établi le courant dans le circuit extérieur est faible, ce qui rend inefficace ce moyen commutateur lorsqu'il s'agit de réaliser la commande en tension d'une couche de cristal liquide. Selon l'invention, la situation peut être différente lorsqu'on applique au photoconducteur une tension alternative. Si la fréquence de la tension alternative est suffisamment grande devant $1/\tau$, la charge d'espace dans le photoconducteur n'a pas le temps de s'établir et le courant mesuré dans le circuit extérieur est voisin de Io. Dans ces conditions la tension transférée au cristal liquide est notable et contribue à commander efficacement la modulation optique que ce cristal liquide permet d'obtenir.

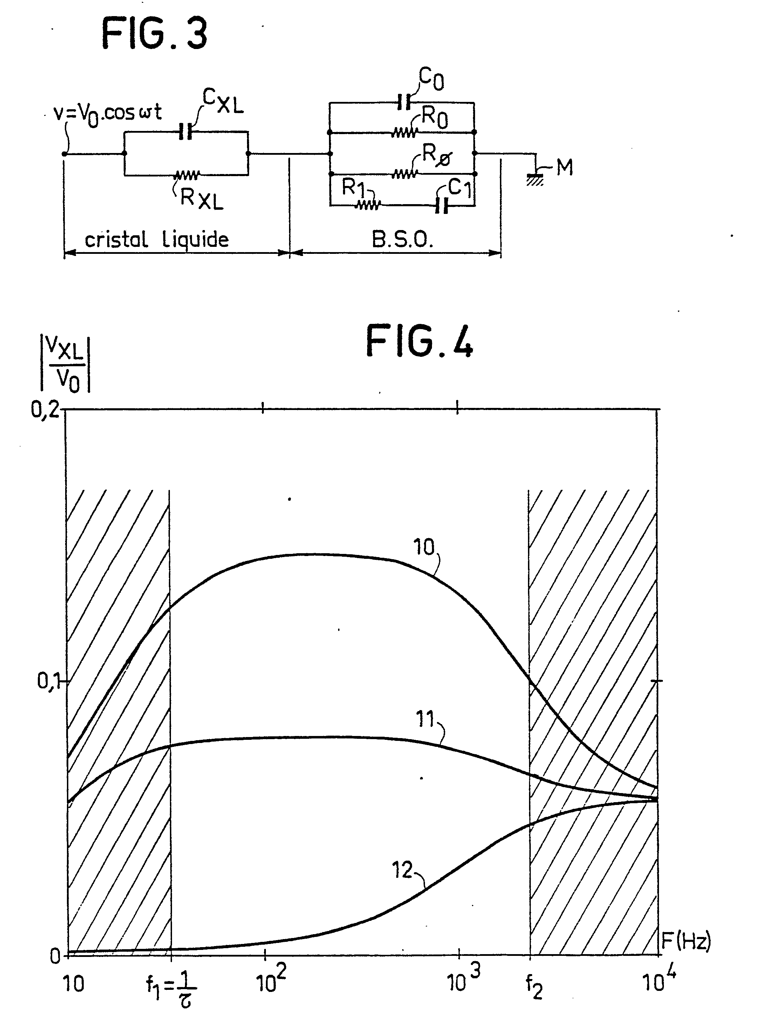

Pour rendre plus clair le choix des conditions de fonctionnement on a représenté sur la figure 3 le schéma équivalent de la cellule illustrée sur la figure 1. La figure 3 s'applique au fonctionnement dynamique avec une tension de polarisation alternative. Ce schéma se présente sous la forme d'un potentiomètre composé de deux branches reliées en série à la source de polarisation. La source fournit une tension $v = Vo \cdot \cos\omega t$ ; l'une de ses bornes est reliée à la masse M. La branche de gauche correspond au cristal liquide 1, celle de droite à la lame photoconductrice 3. La couche de cristal liquide est représentée par une résistance de fuite Rxl en parallèle sur une capacité Cxl. Pour la lame photoconductrice, les éléments de la figure 3 représentent :

Ro : résistance d'obscurité du photoconducteur,

Co : capacité du photoconducteur monté en condensateur,

R$\phi$ : résistance variable sous illumination $\phi$ (R$\phi$ décroît lorsque l'illumination augmente),

$R_1$, $C_1$ : dipôle série caractérisant le développement en régime transitoire d'un effet de charge d'espace, le produit $R_1 \cdot C_1$ étant égal à la constante de temps $\tau$ illustrée sur la figure 2.

Dans l'exemple considéré la lame photoconductrice a une épaisseur de 2 mm et la constante de temps $\tau$ — est de l'ordre de 30 ms pour un niveau d'illumination $\phi = 2mW/cm^2$, ce qui correspond à une fréquence de 33,3 Hz. Une caractéristique intéressante du système est la courbe donnant la tension appliquée au cristal liquide rapportée à la tension appliquée à la cellule en fonction de la fréquence. C'est ce que représente le graphe de la figure 4 qui est un relevé expérimental pour une tension délivrée par le générateur : $v = Vo \cos\omega t$ et pour un niveau d'illumination $\phi \simeq 14mW \cdot cm^{-2}$.

La courbe 10 a été relevée pour une illumination $\phi = 14mW \cdot cm^{-2}$, la courbe 11 sous illumination $\phi/2$ et la courbe 12 dans l'obscurité. Les commentaires qui vont suivre porteront sur les courbes 10 et 11, c'est-à-dire sous illumination. En continu ou en basse fréquence, à cause de l'effet de charge d'espace, la tension transférée au cristal liquide est faible car on voit sur le schéma de la figure 3 que l'influence du dipôle R1C1 est grande. La fréquence augmentant, le dipôle R1C1 tend à ne plus comprendre que la résistance R1 ce qui traduit le fait que la charge d'espace dans le photoconducteur n'a plus le temps de s'établir ($f > 1/\tau$) et la tension transférée au cristal liquide augmente. Pour des fréquences comprises entre 100 Hz et 1 000 Hz les caractéristiques 10 et 11 présentent des parties plates fortement séparées. Par contre pour des fréquences supérieures à 1 000 Hz, on voit que le rapport $|Vxl/Vo|$ tend pour toutes les caractéristiques vers une valeur unique. La meilleure utilisation de la cellule se situe donc dans la gamme de fréquence correspondant aux régions plates des caractéristiques 10 et 11. Pour définir cette gamme de fréquence d'utilisation, on peut prendre pour limite inférieure la fréquence basse $f1 = 1/\tau = 1/R1 \cdot C1$ et pour limite supérieure la fréquence haute f2 qui correspond à la position du point d'inflexion de la courbe $|Vxl/Vo|$ en fonction de la fréquence. f2 étant beaucoup plus grande que $1/\tau$, la charge d'espace dans le photoconducteur n'a pas le temps de s'établir et le dipôle R1C1 se réduit à R1. De ce fait on peut inclure dans R$\phi$ l'effet de R1. Dans ces conditions, c'est-à-dire avec un éclairement incident : R$\phi$ < Ro, le schéma de la figure 3 se réduit à deux dipôles RC.

Un calcul simple permet d'avoir $|Vxl/Vo|$ en fonction de R$\phi$, Co, Rxl, Cxl et $\omega$ :

$$\left| \frac{Vx1}{Vo} \right| = k \sqrt{\frac{1 + a\omega^2}{1 + b\omega^2}}$$

où $\omega$ est la fréquence angulaire
avec

$$k = \frac{Rx1}{Rx1 + R\Phi}, \quad a = R\Phi^2 \cdot C^2$$

et

$$b = \left( \frac{R\Phi \cdot Rx1}{R\Phi + Rx1} \right)^2 (Co + Cx1)^2$$

On constate que la dérivée seconde s'annule pour :

$$\omega_2^2 = \frac{-1 + \sqrt{1 + 3\dfrac{a}{b}}}{3\,a}$$

Une lame photoconductrice de 2 mm d'épaisseur sous un niveau d'illumination de $1mW \cdot cm^{-2}$ (pour une longueur d'onde de 450 angströms) présente à peu près la même résistance que la couche de cristal liquide de 15 microns d'épaisseur (environ $10^9 \Omega$). Par contre l'épaisseur de la couche de cristal liquide étant beaucoup plus faible que celle de la lame photoconductrice : $Cxl > Co$

Il résulte que :

$$f2 = \frac{1}{2\,\pi\,\sqrt{2}} \frac{R\Phi + Rx1}{R\Phi \cdot Rx1} \cdot \frac{1}{Cx1}$$

La cellule fonctionnera avec un rendement d'autant plus élevé que le rapport $|Vxl/Vo|$ sera grand. Les fréquences f1 et f2 sont les fréquences limites d'utilisation. On choisira la fréquence du générateur dans la partie non hachurée de la figure 4 de telle sorte que :

$f1 < f < f2$, pour avoir un fonctionnement optimum du système.

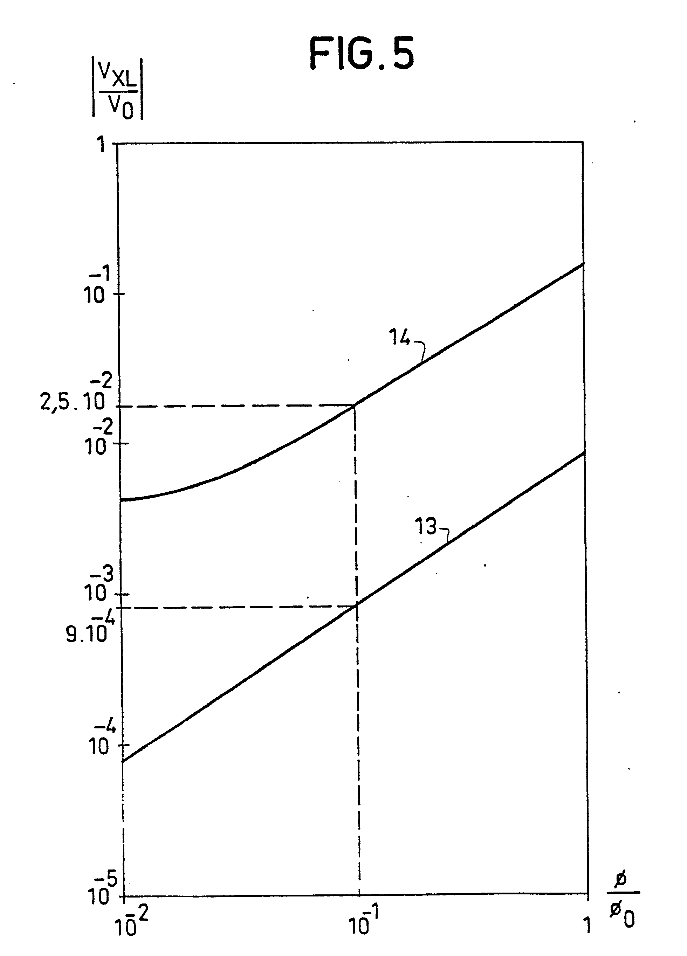

Les avantages présentés par le fonctionnement sous tension alternative dans la gamme de fréquence définie par l'invention sont clairement indiqués sur la figure 5. Sur cette figure, on a représenté deux courbes dans un graphe donnant la tension aux bornes du cristal liquide rapportée à la tension aux bornes de la cellule par rapport à un niveau d'illumination ф rapporté à un niveau ф 0 correspondant à la saturation du photoconducteur. Ce sont des courbes de transfert en tension. La courbe 13 a été relevée pour une tension de fonctionnement continue et la courbe 14 pour une tension alternative à la fréquence 100 Hz. On constate que pour un même niveau d'illumination de la cellule la tension transférée au cristal liquide est beaucoup plus importante pour le fonctionnement à la fréquence de 100 Hz que pour le fonctionnement en continu. A titre d'exemple pour

$$\frac{\Phi}{\Phi o} = \frac{1}{10}, \quad \frac{Vx1}{Vo} = 9.10^{-4}$$

pour une tension continue et $2,5 \cdot 10^{-2}$ pour une tension alternative de fréquence 100 Hz. En conséquence la tension transférée au cristal liquide est environ 30 fois plus élevée pour un fonctionnement sous tension alternative dans une gamme de fréquence déterminée que pour un fonctionnement sous tension continue. Ceci est un avantage important de l'invention. Les éléments composant la cellule étant linéaires dans leurs représentations électriques la tension aux bornes du cristal liquide est dépourvue de composante continue ce qui contribue à l'amélioration de la durée de vie de la cellule.

## Revendications

1. Procédé de commande d'un dispositif de visualisation d'une information du type comprenant une valve optique constituée par une couche de cristal liquide (1), destinée à moduler un rayonnement optique incident de lecture, associée à une lame de matériau photoconducteur (3) destinée à recevoir un rayonnement optique d'inscription (9), le dispositif comprenant également des moyens pour appliquer à ladite valve une tension de polarisation alternative de fréquence déterminée et d'amplitude Vo, ladite couche étant soumise à une fraction Vxl de ladite tension de polarisation, la valeur de ladite fraction étant fonction du rayonnement d'inscription (9), caractérisé en ce que ladite fréquence est choisie entre une limite inférieure égale à l'inverse de la constante de temps d'établissement de charge d'espace dudit matériau photoconducteur et une limite supérieure correspondant à la fréquence pour laquelle la variation du rapport de transmission en tension $|Vxl/Vo|$ de ladite valve optique présente un point d'inflexion, ces deux valeurs étant déterminées pour le niveau d'illumination d'inscription à recevoir.

2. Procédé de commande selon la revendication 1, caractérisé en ce que le rayonnement de lecture étant un rayonnement de lumière polarisée, des moyens analyseurs de lumière polarisée (8) sont associés à ladite valve.

3. Procédé de commande selon la revendication 2, caractérisé en ce que la couche de cristal liquide étant du type nématique en hélice, ledit rayonnement de lecture est polarisé linéairement et lesdits moyens analytiseurs (8) sont des moyens analyseurs linéaires.

4. Procédé de commande selon l'une quelconque des revendications 1 à 3, caractérisé en ce que le rayonnement de lecture traverse également la lame photoconductrice (3).

5. Procédé de commande selon la revendication 4, caractérisé en ce que le domaine spectral du rayonnement de lecture est différent du domaine spectral de sensibilité du matériau photoconducteur.

## Claims

1. Method of controlling a device for the visualization of an information, of the type comprising an optical valve formed of a liquid crystal layer (1) susceptible to modulate an incident optical reading radiation, associated with a sheet of photoconductive material (3) for receiving an optical writing radiation (9), the device further comprising means for applying to said valve an alternating polarization voltage of determined frequency and of the amplitude Vo, said layer being subjected to a fraction Vxl of said polarization voltage, the value of this fraction depending on the writing radiation (9), characterized in that said frequency is selected between a lower limit equal to the reciprocal of the time constant for establishing the space charge of said photoconductive material and an upper limit corresponding to the frequency for which the variation of the voltage transmission ratio |Vxl/Vo| of said optical valve has a point of inflection, these two values being determined in view of the writing illumination level to be received.

2. Control method according to claim 1, characterized in that the reading radiation is a polarised light radiation and polarised light analysing means (8) are associated with said valve.

3. Control method according to claim 2, characterized in that the liquid crystal layer is of nematic helical type, said reading radiation being linearly polarised and said analysing means (8) are linear analysing means.

4. Control method according to any of claims 1 to 3, characterized in that the reading radiation likewise crosses the photoconductive sheet (3).

5. Control method according to claim 4, characterized in that the spectral range of the reading radiation is different from the spectral range of sensitivity of the photoconductive material.

**Patentansprüche**

1. Verfahren zur Steuerung einer Vorrichtung zur Sichtdarstellung von Informationen, vom Typ mit einem optischen Ventil, das durch eine Flüssigkristallschicht (1) gebildet ist, welche dazu bestimmt ist, eine einfallende optische Lesestrahlung zu modulieren, zugeordnet zu einer Scheibe aus photoleitendem Material (3), welche dazu bestimmt ist, eine optische Einschreibstrahlung (9) zu empfangen, wobei die Vorrichtung ferner Mittel umfaßt, um an das genannte Ventil eine Polarisations-Wechselspannung von bestimmter Frequenz und der Amplitude Vo anzulegen, wobei die Schicht unter der Wirkung eines Bruchteils Vxl der genannten Polarisationsspannung steht, wobei der Wert dieses Bruchteils von der Einschreibstrahlung (9) abhängt, dadurch gekennzeichnet, daß die genannte Frequenz zwischen einem unteren Grenzwert, der gleich dem Kehrwert der Zeitkonstante für den Aufbau der Raumladung des genannten Photoleitermaterials ist, und einem oberen Grenzwert gewählt wird, welcher derjenigen Frequenz entspricht, für welche die Veränderung des Verhältnisses für das Spannungsdurchlaßvermögen |Vxl/Vo| des genannten optischen Ventils einen Wendepunkt aufweist, wobei diese zwei Werte für den zu empfangenden Pegel der Einschreibbeleuchtung bestimmt werden.

2. Steuerverfahren nach Anspruch 1, dadurch gekennzeichnet, daß die Lesestrahlung eine Strahlung polarisierten Lichtes ist und Analysatormittel für polarisiertes Licht (8) dem genannten Ventil zugeordnet sind.

3. Steuerverfahren nach Anspruch 2, dadurch gekennzeichnet, daß die Flüssigkristallschicht vom nematischen Schraubentyp ist, wobei die Lesestrahlung linear polarisiert ist und die genannten Analysatormittel (8) lineare Analysatormittel sind.

4. Steuerverfahren nach einem der Ansprüche 1 bis 3, dadurch gekennzeichnet, daß die Lesestrahlung auch die photoleitende Scheibe (3) durchquert.

5. Steuerverfahren nach Anspruch 4, dadurch gekennzeichnet, daß das Spektralgebiet der Lesestrahlung verschieden vom Spektralgebiet der Empfindlichkeit des Photoleitermaterials ist.

# FIG.1

# FIG.2

0 063 077

FIG. 3

cristal Liquide   B.S.O.

FIG. 4

2

# FIG.5